(19) Europäisches Patentamt / European Patent Office / Office européen des brevets

(11) **EP 4 032 940 A1**

(12) **EUROPEAN PATENT APPLICATION**
published in accordance with Art. 153(4) EPC

(43) Date of publication:
27.07.2022 Bulletin 2022/30

(21) Application number: 20879743.1

(22) Date of filing: 01.09.2020

(51) International Patent Classification (IPC):
C08J 3/075 (2006.01)    C08J 3/24 (2006.01)
C08J 3/18 (2006.01)    H01B 1/12 (2006.01)

(52) Cooperative Patent Classification (CPC):
C08J 3/075; C08J 3/18; C08J 3/20; C08J 3/24;
C08K 5/00; H01B 1/12; H01B 1/20

(86) International application number:
PCT/KR2020/011732

(87) International publication number:
WO 2021/080159 (29.04.2021 Gazette 2021/17)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 23.10.2019 KR 20190131982

(71) Applicants:
• Korea University Research and Business
Foundation
Seoul 02841 (KR)
• Korea University of Technology and Education
Industry-University Corporation Foundation
Cheonan-si, Chungcheongnam-do 31253 (KR)

(72) Inventors:
• BAE, Jin Woo
Yangpyeong-gun Gyeonggi-do 12543 (KR)
• HAN, Chang Soo
Seoul 04428 (KR)
• CHUN, Kyoung Yong
Seoul 02841 (KR)
• SON, Young Jun
Seoul 06638 (KR)

(74) Representative: Prüfer & Partner mbB
Patentanwälte · Rechtsanwälte
Sohnckestraße 12
81479 München (DE)

(54) **ORGANIC IONIC CONDUCTIVE POLYMER GEL ELASTOMER AND METHOD FOR PREPARING SAME**

(57) Disclosed are an organic ion conductive polymer gel elastomer including a polymer matrix; a plasticizing solvent impregnated into the polymer matrix to plasticize the polymer matrix so that the polymer matrix is in a gel state; and an ion conductive dopant ionized by the plasticizing solvent and dispersed in the polymer matrix, wherein the plasticizing solvent and the ion conductive dopant are non-hydrophilic, and a method of preparing the organic ion conductive polymer gel elastomer.

[FIG. 1]

100

EP 4 032 940 A1

## Description

[Technical Field]

The present invention relates to an organic ion conductive polymer gel elastomer and a method of preparing the same.

[Background Art]

With rapid development of electronic information devices in recent years, use of portable information/communication devices and smart devices has become common. In the future, in terms of portability, it is expected that an electronic system that can be attached to or can be inserted into the human body will be developed.

In particular, interest in bendable and stretchable electrical conductors that can be attached to curved body parts such as skin, body, or joints is rapidly increasing.

A hydrogel is a high molecular polymer in the form of a network in which one or more monomers are cross-linked. Hydrogels are prepared from hydrophilic polymer chains through a physical or chemical crosslinking process and are substantially swollen by water, but are insoluble in water.

The mechanical properties of hydrogels are very similar to those of biological tissues. In addition, due to high water content thereof, hydrogels have excellent diffusion properties. Due to these properties, hydrogels have been used in various fields such as contact lenses, drug delivery media, and soft tissue replacement materials such as separators and adhesives.

In addition, as a material for preventing adsorption of biopolymers such as cells and proteins, hydrogels have been actively used in fields such as tissue engineering and biosensors.

A conductive hydrogel is obtained by dispersing a conductive polymer in a hydrated polymer matrix capable of various crosslinking and is a key material necessary for realizing hybrid devices manufactured by grafting bio-derived materials such as proteins to various devices.

In addition to intrinsic elasticity and biocompatibility, conductive hydrogels have electrical conductivity. Accordingly, the conductive hydrogel can be used as an electrode material for a stretchable and flexible device that can be applied to a body part.

However, since water is used as a solvent, when the conductive hydrogel is exposed to the atmosphere for a long time, there arises a problem of changing from a gel state to a solid state due to evaporation of water.

In addition, electrically, when a voltage is applied, an ion conduction phenomenon occurs in which ions move by the voltage. In addition, there is a problem in that electrochemical current is generated due to electrolysis of water above a certain voltage. As a result, it is difficult to achieve uniform electrical conduction, and a part of a hydrogel may be damaged as a result of a chemical reaction.

[Related Art Documents]

[Patent Documents]

Korean Patent Application Publication No. 10-2019-0071489, "POLYMER COMPOSITION, TRANSPARENT CONDUCTIVE POLYMER THIN FILM HAVING EXCELLENT CONDUCTIVITY AND ELASTICITY MANUFACTURED USING THE SAME, TRANSPARENT ELECTRODE MANUFACTURED USING THE SAME, AND METHOD OF PREPARING THE SAME"

Korean Patent Application Publication No. 10-1898499, "POLYMER COMPOSITION, POLYMER MEMBRANE, POLYMER GEL, POLYMER BLOWING AGENT, AND ELECTRONIC DEVICE INCLUDING MEMBRANE, GEL, AND BLOWING AGENT"

[Disclosure]

[Technical Problem]

Therefore, the present invention has been made in view of the above problems, and it is one object of the present invention to provide an organic ion conductive polymer gel elastomer that has transparency by limiting crystallinity by plasticizing a polymer matrix having a physical cross-link and has excellent elasticity, flexibility, and dimensional stability.

It is another object of the present invention to provide an organic ion conductive polymer gel elastomer having excellent ion conductivity by uniformly dispersing an ion conductive dopant in a polymer matrix by a plasticizing solvent.

It is still another object of the present invention to provide an organic ion conductive polymer gel elastomer capable of maintaining the shape of an organic ion conductive polymer gel elastomer for a long period of time by not absorbing moisture by including a non-hydrophilic plasticizing solvent having a high boiling point and an ion conductive dopant and capable of solving the problems of conventional organic ion conductive polymer gel elastomers including water as a solvent.

It is yet another object of the present invention to provide a method of preparing an organic ion conductive polymer gel elastomer having a physical cross-link and having excellent transparency, elasticity, flexibility, dimensional stability, and ion conductivity through a simple process of mixing a polymer, a plasticizing solvent, and an ion conductive dopant and performing drying.

[Technical Solution]

In accordance with one aspect of the present invention, provided is an organic ion conductive polymer gel elastomer including a polymer matrix; a plasticizing solvent impregnated into the polymer matrix to plasticize the polymer matrix so that the polymer matrix is in a gel state; and an ion conductive dopant ionized by the plasticizing solvent and dispersed in the polymer matrix, wherein the plasticizing solvent and the ion conductive dopant have a high boiling point and are non-hydrophilic.

According to the organic ion conductive polymer gel elastomer according to an embodiment of the present invention, the polymer matrix may have a physical cross-link.

According to the organic ion conductive polymer gel elastomer according to an embodiment of the present invention, the plasticizing solvent may have a vapor pressure of 0.00001 mmHg to 10 mmHg at 25 °C.

According to the organic ion conductive polymer gel elastomer according to an embodiment of the present invention, the plasticizing solvent may include one or more selected from the group consisting of adipate-based materials including dibutyl adipate and diethyl adipate, citrate-based materials including acetyl tributyl citrate, phthalate-based materials including dibutyl phthalate, sebacate-based materials including dibutyl sebacate, azelate-based materials, benzoate-based materials, trimellitate-based materials, and phosphate-based materials.

According to the organic ion conductive polymer gel elastomer according to an embodiment of the present invention, the ion conductive dopant may be a non-hydrophilic ionic liquid containing an organic cation and an organic or inorganic anion.

According to the organic ion conductive polymer gel elastomer according to an embodiment of the present invention, the ion conductive dopant may include any one selected from among 1-ethyl-3-methylimidazolium bis(trifluoromethyl-sulfonyl)imide ([EMIM][TFSI]), 1-butyl-3-methylimidazolium bis(trifluoro-methylsulfonyl)imide ([BMIM][TFSI]), 1-ethyl-3-methylimidazolium bis(pentafluoroethanesulfonyl)imide ([EMIM][PFESI]), 1-butyl-3-methylimidazolium bis(pentafluoroethanesulfonyl)imide ([BMIM][TFSI]), 1-ethyl-1-methylpyrrolidinium bis(trifluoromethylsulfonyl)imide ([EMP][TFSI]), 1-butyl-1-methylpyrrolidinium bis(trifluoromethylsulfonyl)imide ([BMP][TFSI]), trihexyl(tetradecyl)phosphonium methanesulfonate, trihexyl(tetradecyl)phosphonium dodecylbenzenesulfonate, trihexyl(tetradecyl)phosphonium chloride, and tetrabutyl phosphonium methanesulfonate.

According to the organic ion conductive polymer gel elastomer according to an embodiment of the present invention, the polymer matrix may include any one selected from among polyvinyl alcohol, polyvinylpyrrolidone, polypyrrole, polyvinylchloride (PVC), polyvinylidene chloride (PVdC), poly(alkyl acrylate), poly(ethyl acrylate), poly(ethylene terephthalate), polymethyl methacrylate (PMMA), polyaniline, polyvinyl acetate, poly(ethyl vinyl acetate), polyvinyl butyrate, polyacrylate, polyacrylic acid esters, polyacrylamide, polymethacrylic acid esters, polymethacrylamide, polyacrylonitrile (PAN), polycaprolactone (PCL), polyvinylidene fluoride (PVDF), poly(2-vinylpyridine), polyvinyl methyl ether, polyvinyl butyral, polybenzimidazole, polyether ether ketone, styrene/acrylic acid esters, vinyl acetate/acrylic acid esters, ethylene/vinyl acetate copolymers, polybutadiene, polyisoprene, polystyrene, polyethylene, polyethyleneimine, polyether, polyester, polycarbonate, polyamine, polyurethane, polypropylene, polyamide, polyimide, polythiophene, polyacetylene, polyetherimide, polysulfone, polyether sulfone, polymethylstyrene, polychlorostyrene, polystyrene sulfonate, polystyrene sulfonyl fluoride, melamine-formaldehyde resins, nylon, epoxy resins, polylactide, polyethylene oxide (PEO), polydimethylsiloxane, CYTOPTM, poly(styrene-co-acrylonitrile), poly(styrene-co-butadiene), poly(styrene-co-divinyl benzene), poly(dimethylsiloxane-co-polyethylene oxide), poly(ethyl-co-vinyl acetate), poly(lactic acid-co-glycolic acid), silicone resins, and cellulose.

According to the organic ion conductive polymer gel elastomer according to an embodiment of the present invention, a weight ratio of the polymer matrix, the plasticizing solvent, and the ion conductive dopant may be 45:45:10 to 3.33:96.6699:0.0001.

[Advantageous effects]

According to one embodiment of the present invention, the present invention has an effect of providing an organic ion conductive polymer gel elastomer that has transparency by limiting crystallinity by plasticizing a polymer matrix having a physical cross-link and has excellent elasticity, flexibility, and dimensional stability.

According to one embodiment of the present invention, the present invention has an effect of providing an organic ion conductive polymer gel elastomer having excellent ion conductivity by uniformly dispersing an ion conductive dopant in a polymer matrix by a plasticizing solvent.

According to one embodiment of the present invention, the present invention has an effect of providing an organic ion conductive polymer gel elastomer capable of maintaining the shape of an organic ion conductive polymer gel elastomer for a long period of time by not absorbing moisture by including a non-hydrophilic plasticizing solvent having a high boiling point and an ion conductive dopant and capable of solving the problems of conventional organic ion conductive polymer gel elastomers including water as a solvent.

According to one embodiment of the present invention, the present invention has an effect of providing a method of preparing an organic ion conductive polymer gel elastomer having a physical cross-link and having excellent transparency, elasticity, flexibility, dimensional stability, and ion conductivity through a simple process of mixing a polymer, a plasticizing solvent, and an ion conductive dopant and performing drying.

[Description of Drawings]

FIG. 1 is a schematic diagram showing an organic ion conductive polymer gel elastomer according to an embodiment of the present invention in detail.

FIG. 2 is a flowchart for explaining a method of preparing an organic ion conductive polymer gel elastomer according to an embodiment of the present invention.

FIG. 3 is a graph showing current versus voltage in an organic ion conductive polymer gel elastomer according to an embodiment of the present invention.

FIG. 4 is a graph showing change in resistance according to deformation of an organic ion conductive polymer gel elastomer according to an embodiment of the present invention.

FIG. 5 is a graph showing change in resistance over time in an organic ion conductive polymer gel elastomer according to an embodiment of the present invention.

FIG. 6 is a graph showing evaluation of the moisture resistance of an organic ion conductive polymer gel elastomer according to an embodiment of the present invention.

FIG. 7 is a graph showing tensile test results of an organic ion conductive polymer gel elastomer according to an embodiment of the present invention.

FIG. 8 is a graph showing results of Young's modulus and toughness of an organic ion conductive polymer gel elastomer according to an embodiment of the present invention.

FIG. 9 is a graph showing analysis of elasticity and mechanical hysteresis of an organic ion conductive polymer gel elastomer according to an embodiment of the present invention.

FIG. 10 is a graph showing tensile cyclic test results of an organic ion conductive polymer gel elastomer according to an embodiment of the present invention.

FIG. 11 is a graph showing resistance change depending on strain in an organic ion conductive polymer gel elastomer according to an embodiment of the present invention.

FIG. 12 is a graph showing analysis results of long-term stability of strain performance in an organic ion conductive polymer gel elastomer according to an embodiment of the present invention.

FIG. 13 is a graph showing change in the Gauge Factor (GF) value of an organic ion conductive polymer gel elastomer according to an embodiment of the present invention observed under various humidity conditions.

FIG. 14 is a graph showing change in the Gauge Factor (GF) value of an organic ion conductive polymer gel elastomer according to an embodiment of the present invention observed under various temperature conditions.

FIG. 15 is a graph showing resistance change of an organic ion conductive polymer gel elastomer according to an embodiment of the present invention under various pressure conditions.

FIG. 16 is a graph showing analysis of evaporation test of an organic ion conductive polymer gel elastomer according to an embodiment of the present invention.

[Best Mode]

The present invention will now be described more fully with reference to the accompanying drawings and contents disclosed in the drawings. However, the present invention should not be construed as limited to the exemplary embodiments described herein.

The terms used in the present specification are used to explain a specific exemplary embodiment and not to limit the present inventive concept. Thus, the expression of singularity in the present specification includes the expression of plurality unless clearly specified otherwise in context. It will be further understood that the terms "comprise" and/or "comprising", when used in this specification, specify the presence of stated components, steps, operations, and/or elements, but do not preclude the presence or addition of one or more other components, steps, operations, and/or elements thereof.

It should not be understood that arbitrary aspects or designs disclosed in "embodiments", "examples", "aspects", etc. used in the specification are more satisfactory or advantageous than other aspects or designs.

In addition, the expression "or" means "inclusive or" rather than "exclusive or". That is, unless mentioned otherwise or clearly inferred from context, the expression "x uses a or b" means any one of natural inclusive permutations.

In addition, as used in the description of the disclosure and the appended claims, the singular form "a" or "an" is intended to include the plural forms as well, unless context clearly indicates otherwise.

Although terms used in the specification are selected from terms generally used in related technical fields, other terms may be used according to technical development and/or due to change, practices, priorities of technicians, etc. Therefore, it should not be understood that terms used below limit the technical spirit of the present invention, and it should be understood that the terms are exemplified to describe embodiments of the present invention.

Also, some of the terms used herein may be arbitrarily chosen by the present applicant. In this case, these terms are defined in detail below. Accordingly, the specific terms used herein should be understood based on the unique meanings thereof and the whole context of the present invention.

Unless defined otherwise, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present invention, and will not be interpreted in an idealized or overly formal sense unless expressly so defined herein.

In addition, in the following description of the present invention, a detailed description of known functions and configurations incorporated herein will be omitted when it may make the subject matter of the present invention unclear. The terms used in the specification are defined in consideration of functions used in the present invention and can be changed according to the intent or conventionally used methods of clients, operators, and users. Accordingly, definitions of the terms should be understood based on the entire description of the present specification.

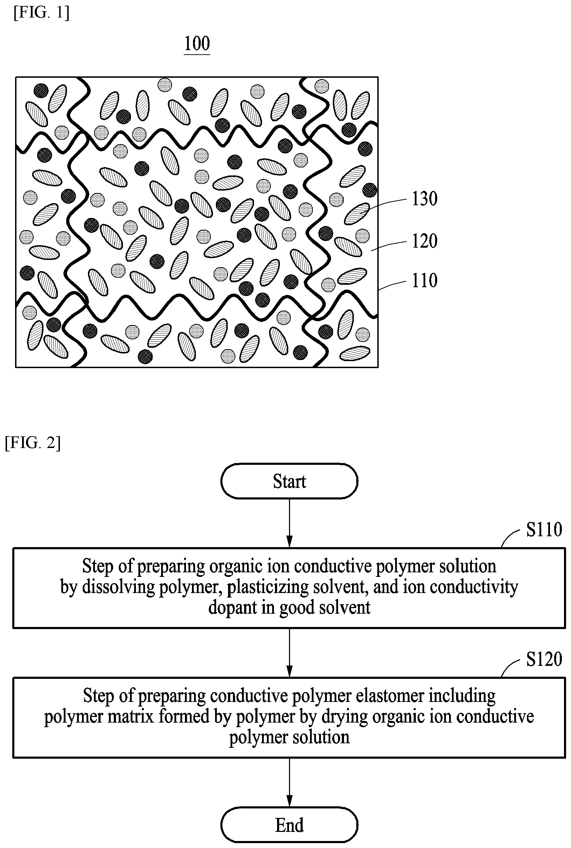

FIG. 1 is a schematic diagram showing an organic ion conductive polymer gel elastomer according to an embodiment of the present invention in detail.

Referring to FIG. 1, an organic ion conductive polymer gel elastomer 100 according to an embodiment of the present invention includes a polymer matrix 110, a plasticizing solvent 120 impregnated into the polymer matrix 110 to plasticize the polymer matrix 110 so that the polymer matrix 110 is in a gel state, and an ion conductive dopant 130 ionized by the plasticizing solvent 120 and dispersed in the polymer matrix 110.

The polymer matrix 110 may have a shape in which polymers are randomly arranged or a shape in which polymers are arranged according to a certain regularity.

According to an embodiment, the polymer matrix 110 may be plasticized by the plasticizing solvent 120 to be in a very fluid state, and a physical cross-linked structure in which chains of the plasticized polymer matrix 110 are physically entangled with each other may be formed.

According to an embodiment, the physical cross-link may mean that the polymer matrix 110 is plasticized so that crystals having a very small size physically connect amorphous crystals.

Although the polymer matrix 110 is illustrated as constituting a polygonal cell in FIG. 1, this is only for convenience of understanding and the structure of the polymer matrix 110 is not limited thereto.

According to an embodiment, the polymer matrix 110 formed by the physical crosslinking may have a thermodynamically reversible structure such as hydrogen bonding, self-assembly of a polymer, and crystal formation.

The polymer matrix 110 may use various polymers to achieve the physical cross-link. For example, the polymer matrix 110 may include any one selected from among polyvinyl alcohol, polyvinylpyrrolidone, polypyrrole, polyvinylchloride (PVC), polyvinylidene chloride (PVdC), poly(alkyl acrylate), poly(ethyl acrylate), poly(ethylene terephthalate), polymethyl methacrylate (PMMA), polyaniline, polyvinyl acetate, poly(ethyl vinyl acetate), polyvinyl butyrate, polyacrylate, polyacrylic acid esters, polyacrylamide, polymethacrylic acid esters, polymethacrylamide, polyacrylonitrile (PAN), polycaprolactone (PCL), polyvinylidene fluoride (PVDF), poly(2-vinylpyridine), polyvinyl methyl ether, polyvinyl butyral, polybenzimidazole, polyether ether ketone, styrene/acrylic acid esters, vinyl acetate/acrylic acid esters, ethylene/vinyl acetate copolymers, polybutadiene, polyisoprene, polystyrene, polyethylene, polyethyleneimine, polyether, polyester, polycarbonate, polyamine, polyurethane, polypropylene, polyamide, polyimide, polythiophene, polyacetylene, polyetherimide, polysulfone, polyether sulfone, polymethylstyrene, polychlorostyrene, polystyrene sulfonate, polystyrene sulfonyl fluoride, melamine-formaldehyde resins, nylon, epoxy resins, polylactide, polyethylene oxide (PEO), polydimethylsiloxane, CYTOPTM, poly(styrene-co-acrylonitrile), poly(styrene-co-butadiene), poly(styrene-co-divinyl benzene), poly(dimethylsiloxane-co-polyethylene oxide), poly(ethyl-co-vinyl acetate), poly(lactic acid-co-glycolic acid), silicone resins, and cellulose, without being limited thereto.

In particular, PVC may change the structural and physicochemical properties of the organic ion conductive polymer gel elastomer 100 according to an embodiment of the present invention depending on the chain length and type of the plasticizing solvent 120. Accordingly, due to wide application thereof, PVC is preferably included in the polymer matrix 110.

In addition, when a block polymer is included in the polymer matrix 110, the structural and physicochemical properties of the organic ion conductive polymer gel elastomer 100 according to an embodiment of the present invention may be optimized by changing the chain length and type of the block copolymer.

The block copolymer included in the polymer matrix 110 includes blocks (hereinafter referred to as blocks A) having low solubility in the plasticizing solvent 120 or the ion conductive dopant 130 and blocks (hereinafter referred to as blocks B) having high solubility in the plasticizing solvent 120 or the ion conductive dopant 130. The phase-separated blocks A in the ion conductive dopant 130 may form the physical crosslinking points of a three-dimensional structure, and the blocks B may connect the physical crosslinking points.

However, when the blocks B connect the physical crosslinking points, the chemical crosslinking points partially included in the polymer matrix 110 may be crystallized and the polymer matrix 110 may become opaque.

Accordingly, the organic ion conductive polymer gel elastomer 100 according to an embodiment of the present invention may have sufficient elasticity and dimensional stability by including the plasticizing solvent 120 for plasticizing the polymer matrix 110 having a physical cross-link and the ion conductive dopant 130 for imparting ion conductivity.

The plasticizing solvent 120 plasticizes the polymer matrix 110 against the crystallization properties of the polymer matrix 110 to form a physical cross-link.

In addition, since the plasticizing solvent 120 effectively dissolves the ion conductive dopant 130, the plasticizing solvent 120 may function as a solvent to uniformly disperse the ion conductive dopant 130 in the polymer matrix 110.

The plasticizing solvent 120 is made of a non-hydrophilic material having a high boiling point, so that the organic ion conductive polymer gel elastomer 100 according to an embodiment of the present invention is not affected by external moisture.

Specifically, the plasticizing solvent 120 may be a non-hydrophilic organic solvent having a vapor pressure significantly lower than that of water at 25 °C. Due to very low volatility thereof, the plasticizing solvent 120 may maintain the elasticity and flexibility of the organic ion conductive polymer gel elastomer 100 according to an embodiment of the present invention for a long period of time.

According to an embodiment, the plasticizing solvent 120 may have a vapor pressure of 0.00001 mm-Hg to 10 mmHg at 25 °C.

When the plasticizing solvent 120 has a vapor pressure of less than 0.00001 mmHg, the viscosity of the plasticizing solvent 120 is greatly increased, so that fluidity is reduced, and as a result, the elasticity and flexibility of the organic ion conductive polymer gel elastomer 100 according to an embodiment of the present invention may be significantly reduced. When the plasticizing solvent 120 has a vapor pressure exceeding 10 mmHg, the plasticizing solvent 120 is easily vaporized, so that the organic ion conductive polymer gel elastomer 100 according to an embodiment of the present invention may be easily cured.

According to an embodiment, the plasticizing solvent 120 may be a non-hydrophilic organic solvent having a boiling point of 150 °C to 400 °C and a melting point of -150 °C to 0 °C. As the difference between boiling and melting points increases, the usable range of the plasticizing solvent 120 increases. Thus, a non-hydrophilic organic solvent having a high boiling point is preferably used.

For example, the plasticizing solvent 120 may include one or more selected from the group consisting of adipate-based materials including dibutyl adipate and diethyl adipate, citrate-based materials including acetyl tributyl citrate, phthalate-based materials including dibutyl phthalate, sebacate-based materials including dibutyl sebacate, azelate-based materials, benzoate-based materials, trimellitate-based materials, and phosphate-based materials, or may include one or more selected from the group consisting of tri-mellitic acid ester-based materials, aliphatic dibasic acid ester-based materials, epoxy-based materials, RIN acid ester-based materials, aliphatic ester-based materials, chlorine-containing materials, and polyester-based materials, without being limited thereto.

Ethylene glycol (EG), which is the plasticizing solvent 120 used in a conventional organic ion conductive polymer gel elastomer 100, has a melting point of -13 °C and a boiling point of 596 °C, showing significant difference between the melting and boiling points. However, the conventional organic ion conductive polymer gel elastomer 100 has a vapor pressure of 0.06 mmHg at 20 °C, and thus has a relatively high volatility, which causes a problem.

In addition, the conventional plasticizing solvent 120 has both hydrophilicity and non-hydrophilicity, and is not separated from water.

In particular, dibutyl adipate has a melting point of -32 °C and a boiling point of 305 °C, showing significant difference between the melting and boiling points. Thus, the usable area of the dibutyl adipate is wide. In addition, dibutyl adipate has a vapor pressure of 0.001 mmHg at 25 °C, showing a very low vapor pressure. Thus, the volatility of dibutyl adipate is significantly low. Accordingly, dibutyl adipate is preferably used as the plasticizing solvent 120.

In addition, the plasticizing solvent 120 may reduce the glass transition temperature of the polymer matrix 110 due to the very large molecular size thereof, thereby increasing the ionic conductivity of the organic ion conductive polymer gel elastomer according to an embodiment of the present invention.

The ion conductive dopant 130 may be a non-hydrophilic ionic liquid containing an organic cation and an organic or inorganic anion, and may be in the form of a molten salt.

That is, instead of conventional carbonate-based organic solvents, a non-volatile and flame-retardant ionic liquid is preferably used as the ion conductive dopant 130.

The ion conductive dopant 130 is a non-hydrophilic ionic liquid, and generally has a negligible small vapor pressure and thus has excellent non-volatile properties.

In addition, the ion conductive dopant 130 may be a non-hydrophilic ionic liquid having a thermal decomposition temperature of 300 °C or higher. In this case, excellent thermal stability may be ensured.

In addition, the ion conductive dopant 130, which is a non-hydrophilic ionic liquid, has a very high ionic conductivity (~1 mS/cm), a specific capacity (~10 $\mu$F/cm$^2$), and a wide electrochemical stability window (4V to 7V) similar to those of an aqueous electrolyte, thus showing excellent properties.

According to an embodiment, the ion conductive dopant 130 may include any one selected from among 1-ethyl-3-methylimidazolium bis(trifluoromethyl-sulfonyl)imide ([EMIM][TFSI]), 1-butyl-3-methylimidazolium bis(trifluoro-methylsulfonyl)imide ([BMIM][TFSI]), 1-ethyl-3-methylimidazolium bis(pentafluoroethanesulfonyl)imide ([EMIM][PFESI]), 1-butyl-3-methylimidazolium bis(pentafluoroethanesulfonyl)imide ([BMIM][TFSI]), 1-ethyl-1-methylpyrrolidinium bis(trifluoromethylsulfonyl)imide ([EMP] [TFSI]), 1-butyl-1-methylpyrrolidinium bis(trifluoromethylsulfonyl)imide ([BMP][TFSI]), trihexyl(tetradecyl)phosphonium methanesulfonate, trihexyl(tetradecyl)phosphonium dodecylbenzenesulfonate, trihexyl(tetradecyl)phosphonium chloride, and tetrabutyl phosphonium methanesulfonate, without being limited thereto.

In particular, [EMIM][TFSI] consists of an organic cation containing lipophilic EMIM and an organic anion containing lipophilic bis(trifluoro-methylsulfonyl)imide. Due to the large molecular volume and the asymmetric molecular structure thereof, [EMIM][TFSI] interferes with the interaction between organic cations and organic anions, and the regular arrangement of the molecules of the plasticizing solvent 120 in the crystal lattice of the polymer matrix 110 may be suppressed to reduce the melting point of the plasticizing solvent 120. Thus, [EMIM][TFSI] is preferably used as the ion conductive dopant 130.

By including an anion having a large size and high polarizability such as $PF^{6-}$ in a polyvalent cation, the ion conductive dopant 130 may be dissolved in an organic solvent without being soluble in water.

For example, when poly(1-vinyl-3-ethylimidazolium) is used as the cation, the ion conductive dopant 130 may have different solubility in the plasticizing solvent 120 depending on the type of anion.

When the ion conductive dopant 130 includes a halogen anion such as $Br^-$, since electrostatic attraction force between the cation and $Br^-$ of the polymer is strong, the ion conductive dopant 130 may be dissolved only in a solvent having a very high polarity.

However, when the ion conductive dopant 130 includes fluorine such as $BF^{4-}$ or $PF^{6-}$ and is combined with a spherical anion, the ion conductive dopant 130 may be efficiently dissolved in acetone without being soluble in water, but the ion conductive dopant 130 is insoluble in an organic solvent such as THF or ethyl acetate (EtAc).

In addition, when the ion conductive dopant 130 is combined with an asymmetric anion that tends to exhibit polarization, such as bis(trifluoromethylsulfone) imide ($(CF_3SO_2)_2N^-$) and bis(pentafluoroethylsulfone) imide ($(CF_3CF_2SO_2)_2N^-$), the ion conductive dopant 130 may be efficiently dissolved in an organic solvent such as acetone, THF, and EtAc.

When the ion conductive dopant 130 includes triflate ($CF_3SO^{3-}$) ions, the ion conductive dopant 130 has high polarity and thus is insoluble in water, but is soluble in alcohol and acetone.

Since the ion conductive dopant 130 has strong non-hydrophilic properties, the ion conductive dopant 130 may be easily dissolved in the non-hydrophilic plasticizing solvent 120 and may be uniformly dispersed in the form of cations and anions in the polymer matrix 110.

That is, the ion conductive dopant 130 may be uniformly dispersed in the form of ions in the polymer matrix 110 to improve the ion conductivity of the organic ion conductive polymer gel elastomer 100 according to an embodiment of the present invention.

In addition, since the ion conductive dopant 130 is a non-hydrophilic ionic liquid, the organic ion conductive polymer gel elastomer 100 according to an embodiment of the present invention including the ion conductive dopant 130 may not be affected by external moisture.

The organic ion conductive polymer gel elastomer 100 according to an embodiment of the present invention may include the polymer matrix 110, the plasticizing solvent 120, and the ion conductive dopant 130 in a weight ratio of 45:45:10 to 3.33:96.6699:0.0001.

Specifically, the plasticizing solvent 120 and the ion conductive dopant 130 may be mixed in a weight ratio of 1:99 to 50:50 so that the ion conductive dopant 130 is introduced to the plasticizing solvent 120.

When the plasticizing solvent 120 to which the ion conductive dopant 130 is introduced is included in an amount exceeding the range, the organic ion conductive polymer gel elastomer 100 according to an embodiment of the present invention may not be transparent. In addition, there is a problem in that it is difficult to maintain the shape of the organic ion conductive polymer gel elastomer 100.

In addition, when the plasticizing solvent 120 to which the ion conductive dopant 130 is introduced is included in an amount less than the range, since the polymer matrix 110 is not sufficiently plasticized, the elasticity of the organic ion conductive polymer gel elastomer 100 according to an embodiment of the present invention may be reduced.

In addition, the polymer matrix 110 and the plasticizing solvent 120 to which the ion conductive dopant 130 is introduced may be mixed in a weight ratio of 1:0.01 to 1:1 so that the plasticizing solvent 120 is impregnated into the polymer matrix 110 and the ion conductive dopant 130 is dispersed in the polymer matrix 110.

The organic ion conductive polymer gel elastomer 100 according to an embodiment of the present invention may have transparency by limiting crystallinity by plasticizing the polymer matrix 110 having a physical cross-link. In addition, the organic ion conductive polymer gel elastomer 100 may have excellent elasticity, flexibility, and dimensional stability.

In addition, in the organic ion conductive polymer gel elastomer 100 according to an embodiment of the present invention, the ion conductive dopant 130 may be uniformly dispersed in the polymer matrix 110 by the plasticizing solvent 120 to increase ion conductivity.

In addition, since the organic ion conductive polymer gel elastomer 100 according to an embodiment of the present invention does not absorb moisture by including the non-hydrophilic plasticizing solvent 120 and the ion conductive dopant 130, the shape of the organic ion conductive polymer gel elastomer 100 may be maintained for a long period of time.

Hereinafter, a method of preparing an organic ion conductive polymer gel elastomer according to an embodiment of the present invention will be described with reference to FIG. 2.

FIG. 2 is a flowchart for explaining a method of preparing an organic ion conductive polymer gel elastomer according to an embodiment of the present invention.

Referring to FIG. 2, the method of preparing an organic ion conductive polymer gel elastomer according to an embodiment of the present invention includes step S110 of adding a polymer, a plasticizing solvent, and an ion conductive dopant to a good solvent to prepare an organic ion conductive polymer solution and step S120 of drying the organic ion conductive polymer solution to prepare an organic ion conductive polymer gel elastomer including a polymer matrix formed by the polymer.

In this case, in the method of preparing an organic ion conductive polymer gel elastomer according to an embodiment of the present invention, the components of the above-described organic ion conductive polymer gel elastomer are included, and thus repeated description will be omitted.

In step S110, the good solvent should be able to dissolve all of the polymer, the plasticizing solvent, and the ion conductive dopant, and may have a property of rapidly volatilizing due to a very high vapor pressure under atmospheric pressure conditions at room temperature.

Accordingly, in step S110, the polymer, the plasticizing solvent, and the ion conductive dopant may be uniformly mixed to obtain an organic ion conductive polymer gel elastomer.

According to an embodiment, the good solvent may be tetrahydrofuran (THF), without being limited thereto.

In step S110, the polymer may be a material used as a raw material for a polymer matrix. When the polymer is physically crosslinked, the polymer matrix may be formed.

The polymer matrix is plasticized by the plasticizing solvent and becomes a very fluid state. The plasticized polymer matrix chains are physically entangled with each other so that the plasticizing solvent is impregnated in the physically entangled polymer matrix.

The ion conductive dopant is dissolved in the plasticizing solvent having a very low vapor pressure. A good solvent having a higher vapor pressure than the plasticizing solvent is volatilized, and the ion conductive dopant is dispersed in the plasticizing solvent.

As a result, the polymer matrix is physically crosslinked by the plasticizing solvent, and the plasticizing solvent to which the ion conductive dopant is introduced is present in the physically crosslinked polymer matrix.

According to an embodiment, the polymer may include any one selected from among polyvinyl alcohol, polyvinylpyrrolidone, polypyrrole, polyvinylchloride (PVC), polyvinylidene chloride (PVdC), poly(alkyl acrylate), poly(ethyl acrylate), poly(ethylene terephthalate), polymethyl methacrylate (PMMA), polyaniline, polyvinyl acetate, poly(ethyl vinyl acetate), polyvinyl butyrate, polyacrylate, polyacrylic acid esters, polyacrylamide, polymethacrylic acid esters, polymethacrylamide, polyacrylonitrile (PAN), polycaprolactone (PCL), polyvinylidene fluoride (PVDF), poly(2-vinylpyridine), polyvinyl methyl ether, polyvinyl butyral, polybenzimidazole, polyether ether ketone, styrene/acrylic acid esters, vinyl acetate/acrylic acid esters, ethylene/vinyl acetate copolymers, polybutadiene, polyisoprene, polystyrene, polyethylene, polyethyleneimine, polyether, polyester, polycarbonate, polyamine, polyurethane, polypropylene, polyamide, polyimide, polythiophene, polyacetylene, polyetherimide, polysulfone, polyether sulfone, polymethylstyrene, polychlorostyrene, polystyrene sulfonate, polystyrene sulfonyl fluoride, melamine-formaldehyde resins, nylon, epoxy resins, polylactide, polyethylene oxide (PEO), polydimethylsiloxane, CYTOPTM, poly(styrene-co-acrylonitrile), poly(styrene-co-butadiene), poly(styrene-co-divinyl benzene), poly(dimethylsiloxane-co-polyethylene oxide), poly(ethyl-co-vinyl acetate), poly(lactic acid-co-glycolic acid), silicone resins, and cellulose, without being limited thereto.

In addition, in step S110, the plasticizing solvent is non-hydrophilic and plasticizes the polymer matrix to a gel state. The ion conductive dopant is non-hydrophilic and is ionized by the plasticizing solvent and dispersed in the polymer matrix formed by physical crosslinking of the polymer. Since the plasticizing solvent and the ion conductive dopant have been described in detail with reference to FIG. 1, repeated description will be omitted.

The organic ion conductive polymer solution may include the polymer, the plasticizing solvent, and the ion conductive dopant in a weight ratio of 1:1:0.01 to 1:20:20.

When the polymer is included in an amount less than the above range, physical crosslinking due to physical entanglement of the polymer matrix is not sufficiently achieved. As a result, the conductive polymer conductor may not be molded or deposited to have sufficient volume or dimensions.

In addition, when the polymer is included in an amount exceeding the above range, due to insufficient gelation, the transparency, elasticity and flexibility of the conductive polymer conductor may be reduced.

When the plasticizing solvent is included in an amount less than the above range, due to insufficient plasticization of the polymer matrix, the elasticity and flexibility of the conductive polymer conductor may be reduced.

In addition, when the plasticizing solvent is included in an amount exceeding the above range, due to excessive plasticization of the polymer matrix, it may be difficult to maintain the shape of the conductive polymer conductor.

In step S120, the conductive polymer solution is dried to obtain the conductive polymer conductor, and the conductive polymer solution may be injected into a mold having a specific shape and dried so that the conductive polymer conductor has a specific shape.

Accordingly, in step S120, the conductive polymer conductor having a physical cross-link may be prepared.

Hereinafter, in the following preparation examples, organic ion conductive polymer gel elastomers according to the present invention were prepared according to the content of the ion conductive dopant, and properties and effects thereof were evaluated.

**Preparation Examples**

**[Preparation Example 1]**

1 g of commercially available PVC powder (purchased from Scientific Polymer Products, Inc.) and 20 mL of tetrahydrofuran (THF) (purchased from Daejeong Chemical & Metal Co.) were mixed to prepare a PVC solution in which PVC powder was dissolved in tetrahydrofuran.

In a weight ratio of 1:9:0.03 of the PVC solution, dibutyl adipate (purchased from Tokyo Chemical Industry Co.), and [EMIM][TFSI] (purchased from Sigma Aldrich Co.), 9 g of dibutyl adipate and 0.01 g of [EMIM][TFSI] were added to the PVC solution to prepare an organic ion conductive polymer solution.

The organic ion conductive polymer solution was stirred at room temperature for 4 hours, and then dried at room temperature for 48 hours to remove tetrahydrofuran to prepare an organic ion conductive polymer gel elastomer.

**[Preparation Example 2]**

An organic ion conductive polymer gel elastomer was prepared in the same manner as in Preparation Example 1, except that the PVC solution, dibutyl adipate, and [EMIM][TFSI] were mixed in a weight ratio of 1:9:0.08 when preparing an organic ion conductive polymer solution.

**[Preparation Example 3]**

An organic ion conductive polymer gel elastomer was prepared in the same manner as in Preparation Example 1, except that the PVC solution, dibutyl adipate, and [EMIM][TFSI] were mixed in a weight ratio of 1:9:0.4 when preparing an organic ion conductive polymer solution.

**[Preparation Example 4]**

An organic ion conductive polymer gel elastomer was prepared in the same manner as in Preparation Example 1, except that the PVC solution, dibutyl adipate, and [EMIM][TFSI] were mixed in a weight ratio of 1:9:0.8 when preparing an organic ion conductive polymer solution.

**[Preparation Example 5]**

An organic ion conductive polymer gel elastomer was prepared in the same manner as in Preparation Example 1, except that the PVC solution, dibutyl adipate, and [EMIM][TFSI] were mixed in a weight ratio of 1:9:1.2 when preparing an organic ion conductive polymer solution.

**[Preparation Example 6]**

An organic ion conductive polymer gel elastomer was prepared in the same manner as in Preparation Example 1, except that the PVC solution, dibutyl adipate, and [EMIM][TFSI] were mixed in a weight ratio of 1:9:1.6 when preparing an organic ion conductive polymer solution.

**[Comparative Example]**

An organic ion conductive polymer gel elastomer was prepared in the same manner as in Preparation Example 1, except that the PVC solution, dibutyl adipate, and [EMIM][TFSI] were mixed in a weight ratio of 1:9:0 when preparing an organic ion conductive polymer solution([EMIM][TFSI] not added).

**Evaluation of properties**

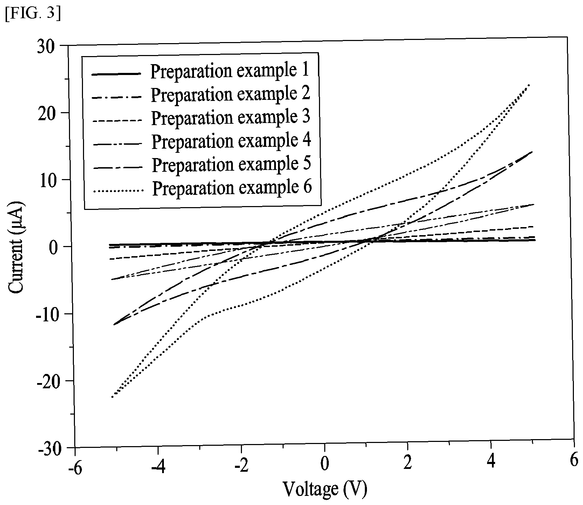

FIG. 3 is a graph showing current versus voltage in an organic ion conductive polymer gel elastomer according to an embodiment of the present invention.

Referring to FIG. 3, in the case of Preparation Example 6 with the highest content of [EMIM][TFSI], which is an ion conductive dopant, change in current versus voltage is non-linear. In the case of Preparation Example 1 with the lowest content of [EMIM][TFSI], which is an ion conductive dopant, change in current versus voltage is linear.

That is, as the content of the ion conductive dopant, which is an ionic liquid, is reduced, the ion conductive dopant does not substantially intervene in electrical conduction of the organic ion conductive polymer gel elastomer, and Faradaic conduction, which is electric conduction by movement of electrons, mainly contributes to electric conduction of the organic ion conductive polymer gel elastomer.

In addition, as the content of the ion conductive dopant, which is an ionic liquid, is increased, change in current versus voltage of the organic ion conductive polymer gel elastomer is sharp and non-linear, indicating that the capacitance properties of the organic ion conductive polymer gel elastomer is improved.

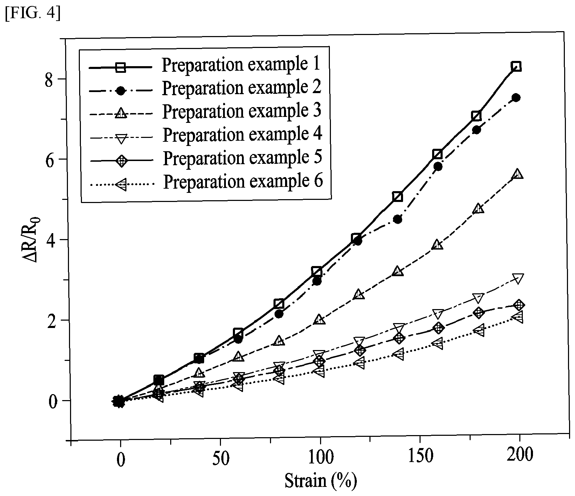

FIG. 4 is a graph showing change in resistance according to deformation of an organic ion conductive polymer gel elastomer according to an embodiment of the present invention.

Referring to FIG. 4, the organic ion conductive polymer gel elastomers of Preparation Examples 1 to 6 exhibit change in resistance up to a deformation (strain) of 200 %.

Accordingly, the organic ion conductive polymer gel elastomer according to an embodiment of the present invention may maintain electrical conductivity even when a strain is applied, indicating that elasticity, dimensional stability, and flexibility are excellent.

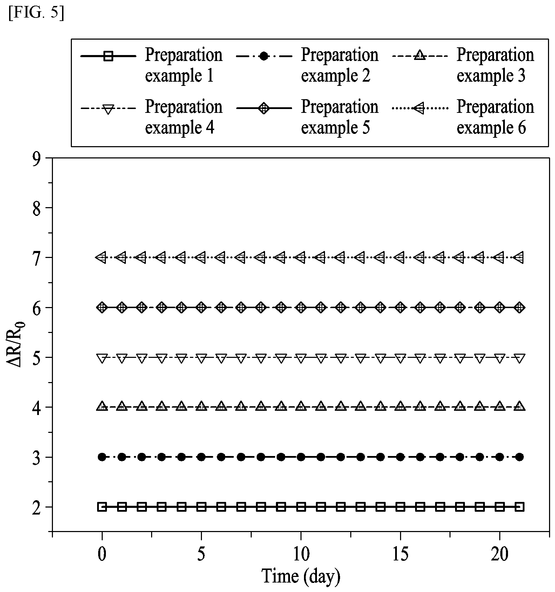

FIG. 5 is a graph showing change in resistance over time in an organic ion conductive polymer gel elastomer according to an embodiment of the present invention.

After the organic ion conductive polymer gel elastomers of Preparation Examples 1 to 6 were prepared, the organic ion conductive polymer gel elastomers were left at room temperature. Then, change in resistance of the organic ion conductive polymer gel elastomers was measured over time, and the results are shown in FIG. 5.

Referring to FIG. 5, 24 hours after leaving the organic ion conductive polymer gel elastomers of Preparation Examples 1 to 6 at room temperature, change in the weight of the plasticizing solvent is within only about 0.1 %.

In addition, even after 21 days of leaving the organic ion conductive polymer gel elastomers of Preparation Examples 1 to 6 at room temperature, change in the weight of the plasticizing solvent is within about 0.1 %.

In conventional hydrogels, resistance increases as the contained moisture evaporates. However, in the case of the organic ion conductive polymer gel elastomers of Preparation Examples 1 to 6, resistance hardly changes over time, which is due to use of the non-volatile and non-hydrophilic plasticizing solvent having a high boiling point and the ion conductive dopant.

Accordingly, in the case of the organic ion conductive polymer gel elastomer according to an embodiment of the present invention, since the plasticizing solvent is non-volatile, the polymer matrix may be plasticized for a long period of time and the ion conductive dopant may be uniformly dispersed in the polymer matrix, thereby achieving excellent durability.

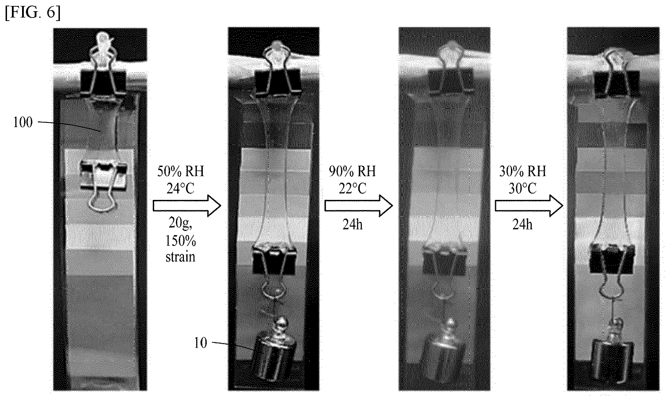

FIG. 6 shows the moisture resistance of the organic ion conductive polymer gel elastomer according to Preparation Example 3 of the present invention. As shown in (a) of FIG. 6, the organic ion conductive polymer gel elastomer 100 was prepared, and then a 20 g weight (10) was suspended at the end of the organic ion conductive polymer gel elastomer 100 under the conditions of a relative humidity (RH) of 50 % and a temperature of 24 °C. At this time, as shown in (b) of FIG. 6, the organic ion conductive polymer gel elastomer 100 was deformed by 150 %. Then, the organic ion conductive polymer gel elastomer 100 was left for 24 hours under the conditions of a relative humidity (RH) of 90% and a temperature of 22 °C ((c) of FIG. 6) or left for 24 hours under the conditions of a relative humidity (RH) of 30 % and a temperature of 30 °C ((d) of FIG. 6). Then, the shape and length of the organic ion conductive polymer gel elastomer 100 were observed. Referring to FIG. 6, there is little change in the shape and length of the organic ion conductive polymer gel elastomer according to an embodiment of the present invention, indicating that the organic ion conductive polymer gel elastomer according to an embodiment of the present invention is not affected by change in humidity and temperature.

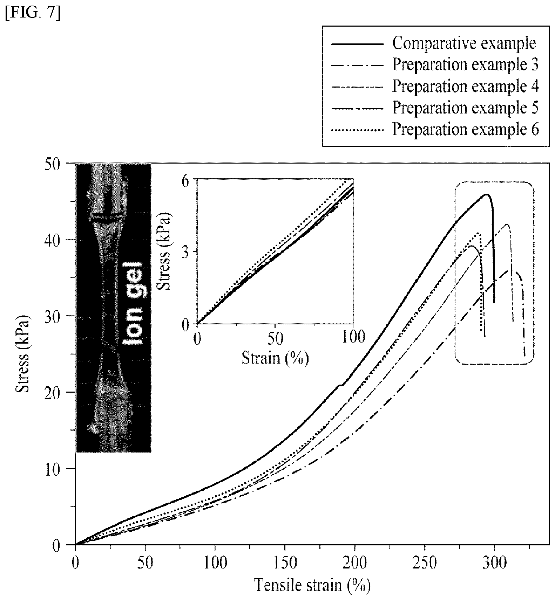

FIG. 7 shows the tensile test results of the organic ion conductive polymer gel elastomers according to Preparation Examples 3 to 6 of the present invention and the organic ion conductive polymer gel elastomer according to Comparative Example. Referring to FIG. 7, the organic ion conductive polymer gel elastomers according to Preparation Examples 3 to 6 and the organic ion conductive polymer gel elastomer according to Comparative Example exhibit a fracture point at a strain of 280 to 320 % and a maximum tensile stress of 35 to 46 kPa. The organic ion conductive polymer gel elastomer according to Comparative Example exhibits the greatest stress at all strain levels, but the organic ion conductive polymer gel elastomers according to Preparation Examples 3 to 6 exhibit lower stress than the organic ion conductive polymer gel elastomer according to Comparative Example at all strain levels. In the stress-strain (S-S) curve from 0 to 100 % strain, the organic ion conductive polymer gel elastomers according to Preparation Examples 3 to 6 show a linear curve.

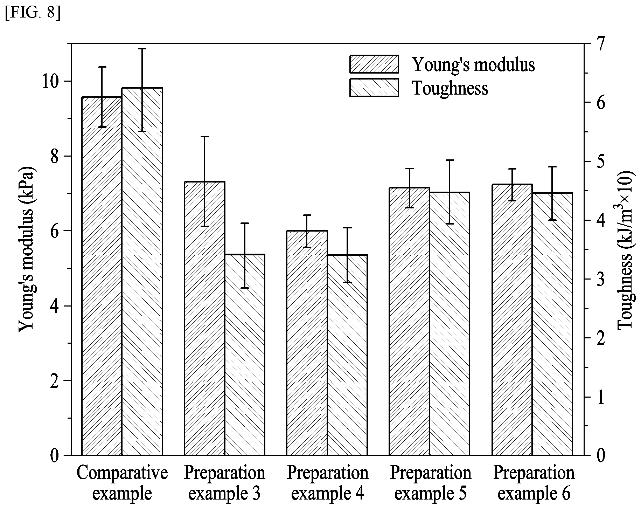

FIG. 8 shows the results of Young's modulus and toughness calculated based on the ion conductive dopant content from the S-S curve in FIG. 7. The organic ion conductive polymer gel elastomer according to Comparative Example has an average Young's modulus of 9.52 kPa, and the organic ion conductive polymer gel elastomers according to Preparation Examples 3 to 6 have an average Young's modulus of 7.28 kPa (Preparation Example 3), 5.96 kPa (Preparation Example 4), 7.09 kPa (Preparation Example 5), and 7.19 kPa (Preparation Example 6), respectively. In the case of toughness, a tendency similar to Young's modulus is observed. The organic ion conductive polymer gel elastomers according to Preparation Examples 3 to 6 have an average toughness of 30 to 50 kJ/m$^3$.

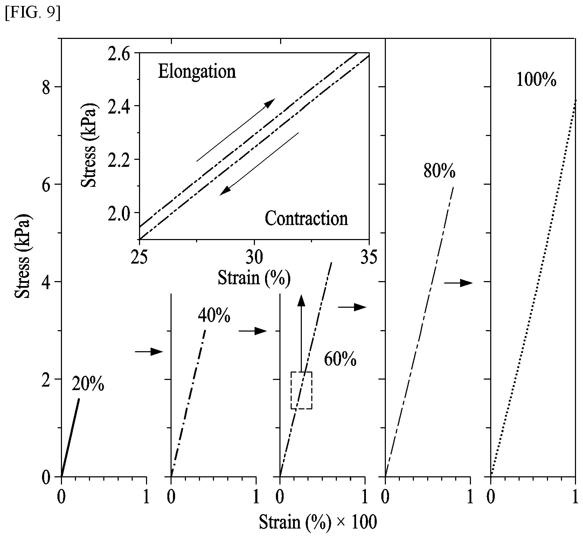

FIG. 9 shows the analysis of elasticity and mechanical hysteresis of the organic ion conductive polymer gel elastomer according to Preparation Example 3 of the present invention by performing repeated S-S tests. Referring to FIG. 9, under reversible 20 to 100 % strain, a linear behavior is observed between elongation and contraction. Referring to the inset of FIG. 9, the S-S curve magnified at 60 % strain shows a clear linear pattern, and furthermore, hysteresis is hardly observed because elongation and contraction are almost identical.

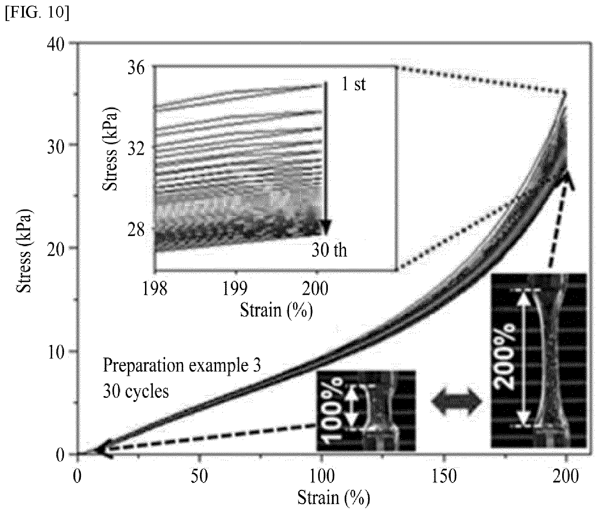

FIG. 10 shows the cyclic tensile cycle test results of the organic ion conductive polymer gel elastomer according to Preparation Example 3 of the present invention. Referring to FIG. 10, from the tensile cycle test results, it can be confirmed that elasticity is maintained after 30 cycles up to 200 % strain. Stress at 200 % strain is 35.01 kPa (1st cycle) to 27.77 kPa (30th cycle), which shows that excellent cyclic tensile modulus is maintained even at a large strain.

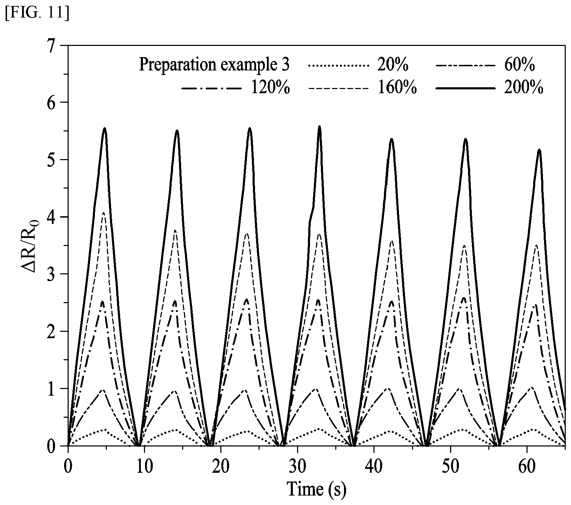

FIG. 11 shows resistance change depending on strain in the organic ion conductive polymer gel elastomer according to Preparation Example 3 of the present invention. Referring to FIG. 11, strain is applied as a triangular waveform, the period of each triangular waveform is 9.4 seconds (s), the applied voltage is 0.5 V, and a strain level range is 20 to 200 %. Measured resistance change ($\Delta R/R_0$) is normalization of the degree of resistance change ($\Delta R$) compared to initial resistance ($R_0$). Referring to FIG. 11, the organic ion conductive polymer gel elastomer according to Preparation Example 3 shows stable performance for 7 cycles at different strain degrees (20, 60, 120, 160, and 200 %).

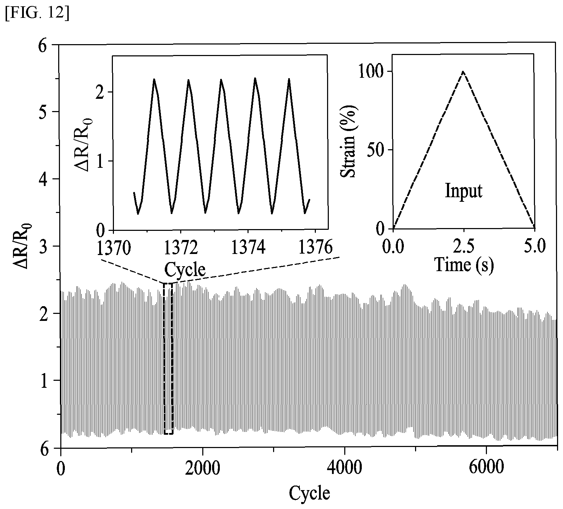

FIG. 12 shows the analysis results of long-term stability of strain performance for the organic ion conductive polymer gel elastomer according to Preparation Example 3 of the present invention. In FIG. 12, resistance change ($\Delta R/R_0$) is measured over 6,000 cycles. Referring to the results, resistance change ($\Delta R/R_0$) remains stable and constant. As shown in the enlarged inset, resistance change ($\Delta R/R_0$) is observed in a range of 0.2 to 2.0.

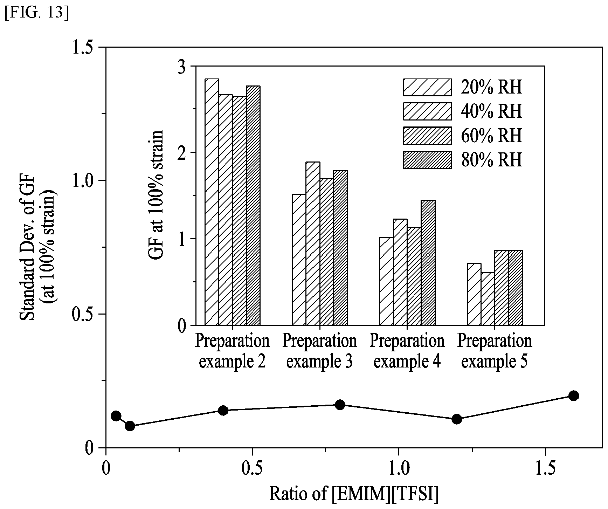

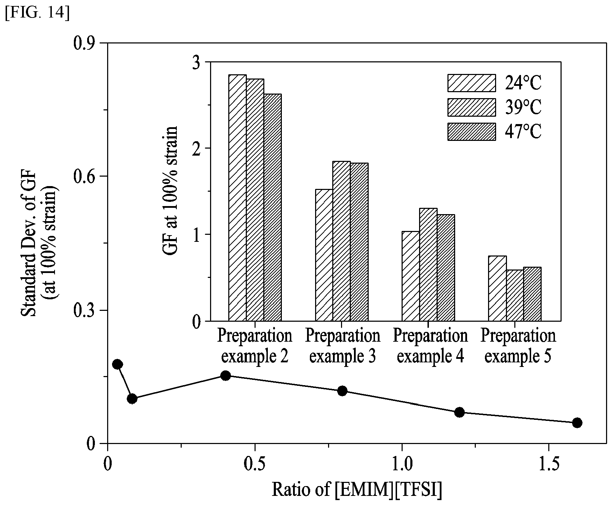

FIGS. 13 and 14 show the change of gauge factor (GF) expressed by Equation 1 below for the organic ion conductive polymer gel elastomer according to an embodiment of the present invention under various humidity and temperature.

[Equation 1]

$$\text{GF} = \left(\frac{\Delta R}{R_0}\right) \times \frac{1}{\text{strain}}$$

In Equation 1,

$R_0$ represents initial resistance,
$\Delta R$ represents the degree of resistance change compared to the initial resistance ($R_0$), and
strain represents strain rate.

Referring to FIG. 13, change in the GF value of the organic ion conductive polymer gel elastomers according to Preparation Examples 2 to 5 of the present invention at 20, 40, 60, and 80 % humidity at 100 % strain level is insignificant. In addition, even when the content ratio (0.03 to 1.6) of the ion conductive dopant ([EM-IM][TFSI]) according to Preparation Examples 1 to 6 of the present invention increases, change in the standard deviation of GF is insignificant, and all are 0.25 level below. These results indicate that the organic ion conductive polymer gel elastomer according to an embodiment of the present invention is not affected by humidity.

Referring to FIG. 14, change in the standard deviation of GF at 100% strain at a temperature change of 24 to 47 °C is insignificant and all are at a level of 0.15 or less. No significant change in the GF value of the organic ion conductive polymer gel elastomers according to Preparation Examples 2 to 5 of the present invention is observed.

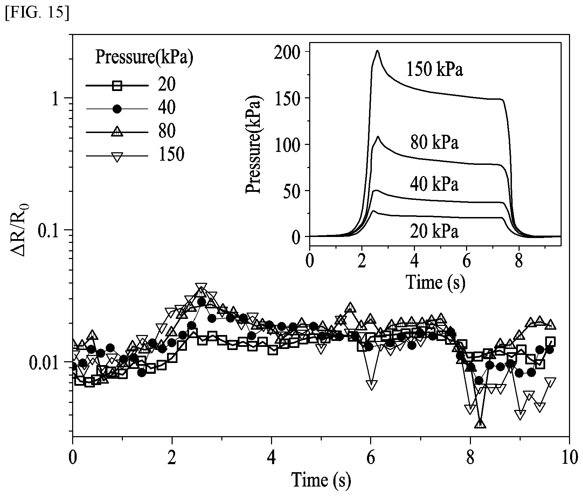

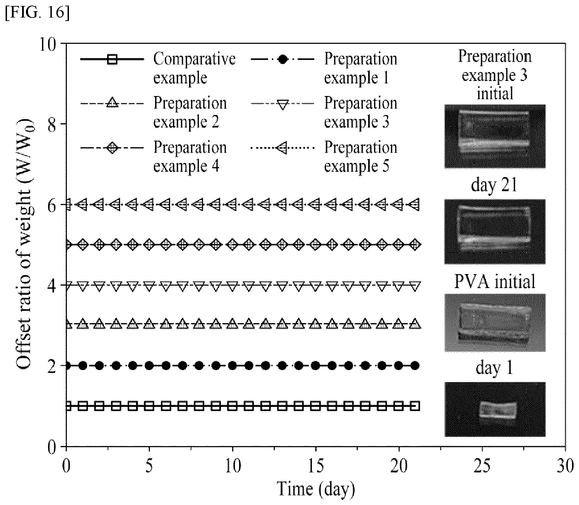

FIG. 15 shows the resistance change of the organic ion conductive polymer gel elastomer according to Preparation Example 6 of the present invention under various pressure conditions. Referring to FIG. 15, when a pressure of 20 to 150 kPa is applied to the surface of the organic ion conductive polymer gel elastomer according to Preparation Example 6, no significant resistance change ($\Delta R/R_0$) is observed depending on the pressure, and resistance change ($\Delta R/R_0$) has a value of 0.1 or less. These results indicate that the organic ion conductive polymer gel elastomer according to an embodiment of the present invention is slightly affected by external pressure. To perform evaporation test on the organic ion conductive polymer gel elastomers according to Preparation Examples 1 to 5 of the present invention and the organic ion conductive polymer gel elastomer according to Comparative Example, the weight of each organic ion conductive polymer gel elastomer was measured at a temperature of 21 to 24 °C and a relative humidity (RH) of 19 to 50 %, and the results are shown in FIG. 16. Meanwhile, a PVA hydrogel was prepared as a control.

Referring to FIG. 16, the weight and volume of the organic ion conductive polymer gel elastomers of Preparation Examples of the present invention and the organic ion conductive polymer gel elastomer according to Comparative Example were remained constant regardless of the content of the ion conductive dopant. In the case of the organic ion conductive polymer gel elastomer according to Preparation Example 3, the appearance thereof was maintained even after 21 days had elapsed. In contrast, the volume of the PVA hydrogel was significantly reduced after one day. The non-evaporable nature of the organic ion conductive polymer gel elastomer according to an embodiment of the present invention is due to the non-volatile nature of dibutyl adipate (DBA).

Although the present invention has been described through limited examples and figures, the present invention is not intended to be limited to the examples. Those skilled in the art will appreciate that various modifications, additions, and substitutions are possible, without departing from the scope and spirit of the invention. Therefore, the scope of the present invention should not be limited by the embodiments but should be determined by the following claims and equivalents to the following claims.

[Description of Symbols]

    100: ORGANIC ION CONDUCTIVE POLYMER GEL ELASTOMER
    110: POLYMER MATRIX
    120: PLASTICIZING SOLVENT
    130: ION CONDUCTIVE DOPANT

**Claims**

1. An organic ion conductive polymer gel elastomer, comprising:

   a polymer matrix;
   a plasticizing solvent impregnated into the polymer matrix to plasticize the polymer matrix so that the polymer matrix is in a gel state; and
   an ion conductive dopant ionized by the plasticizing solvent and dispersed in the polymer matrix,
   wherein the plasticizing solvent and the ion conductive dopant have a high boiling point and are non-hydrophilic.

2. The organic ion conductive polymer gel elastomer according to claim 1, wherein the polymer matrix has a physical cross-link.

3. The organic ion conductive polymer gel elastomer according to claim 1, wherein the plasticizing solvent has a vapor pressure of 0.00001 mmHg to 10 mmHg at 25 °C.

4. The organic ion conductive polymer gel elastomer according to claim 3, wherein the plasticizing solvent comprises one or more selected from the group consisting of adipate-based materials comprising dibutyl adipate and diethyl adipate, citrate-based materials comprising acetyl tributyl citrate, phthalate-based materials comprising dibutyl phthalate, sebacate-based materials comprising dibutyl sebacate, azelate-based materials, benzoate-based materials, trimellitate-based materials, and phosphate-based materials.

5. The organic ion conductive polymer gel elastomer according to claim 1, wherein the ion conductive dopant is a non-hydrophilic ionic liquid containing an organic cation and an organic or inorganic anion.

6. The organic ion conductive polymer gel elastomer according to claim 5, wherein the ion conductive dopant comprises any one selected from among 1-ethyl-3-methylimidazolium bis(trifluoromethyl-sulfonyl)imide ([EMIM][TFSI]), 1-butyl-3-methylimidazolium bis(trifluoromethylsulfonyl)imide ([BMIM][TFSI]), 1-ethyl-3-methylimidazolium bis(pentafluoroethanesulfonyl)imide ([EMIM][PFESI]), 1-butyl-3-methylimidazolium bis(pentafluoroethanesulfonyl)imide ([BMIM] [TFSI]), 1-ethyl-1-methylpyrrolidinium bis(trifluoromethylsulfonyl)imide ([EMP] [TFSI]), 1-butyl-1-methylpyrrolidinium bis(trifluoromethylsulfonyl)imide ([BMP] [TFSI]), trihexyl(tetradecyl)phosphonium methanesulfonate, trihexyl(tetradecyl)phosphonium dodecylbenzenesulfonate, trihexyl(tetradecyl)phosphonium chloride, and tetrabutyl phosphonium methanesulfonate.

7. The organic ion conductive polymer gel elastomer according to claim 1, wherein the polymer matrix comprises any one selected from among polyvinyl alcohol, polyvinylpyrrolidone, polypyrrole, polyvinylchloride (PVC), polyvinylidene chloride (PVdC), poly(alkyl acrylate), poly(ethyl acrylate), poly(ethylene terephthalate), polymethyl methacrylate (PMMA), polyaniline, polyvinyl acetate, poly(ethyl vinyl acetate), polyvinyl butyrate, polyacrylate, polyacrylic acid esters, polyacrylamide, polymethacrylic acid esters, polymethacrylamide, polyacrylonitrile (PAN), polycaprolactone (PCL), polyvinylidene fluoride (PVDF), poly(2-vinylpyridine), polyvinyl methyl ether, polyvinyl butyral, polybenzimidazole, polyether ether ketone, styrene/acrylic acid esters, vinyl acetate/acrylic acid esters, ethylene/vinyl acetate copolymers, polybutadiene, polyisoprene, polystyrene, polyethylene, polyethyleneimine, polyether, polyester, polycarbonate, polyamine, polyurethane, polypropylene, polyamide, polyimide, polythiophene, polyacetylene, polyetherimide, polysulfone, polyether sulfone, polymethylstyrene, polychlorostyrene, polystyrene sulfonate, polystyrene sulfonyl fluoride, melamine-formaldehyde resins, nylon, epoxy resins, polylactide, polyethylene oxide (PEO), polydimethylsiloxane, CYTOPTM, poly(styrene-co-acrylonitrile), poly(styrene-co-butadiene), poly(styrene-co-divinyl benzene), poly(dimethylsiloxane-co-polyethylene oxide), poly(ethyl-co-vinyl acetate), poly(lactic acid-co-glycolic acid), silicone resins, and cellulose.

8. The organic ion conductive polymer gel elastomer according to claim 1, wherein a weight ratio of the polymer matrix, the plasticizing solvent, and the ion conductive dopant is 45:45:10 to 3.33:96.6699:0.0001.

[FIG. 1]

<u>100</u>

130
120
110

[FIG. 2]

Start

↓

S110

Step of preparing organic ion conductive polymer solution
by dissolving polymer, plasticizing solvent, and ion conductivity
dopant in good solvent

↓

S120

Step of preparing conductive polymer elastomer including
polymer matrix formed by polymer by drying organic ion conductive
polymer solution

↓

End

[FIG. 3]

[FIG. 4]

[FIG. 5]

[FIG. 6]

50% RH
24°C

20g,
150%
strain

90% RH
22°C

24h

30% RH
30°C

24h

[FIG. 7]

[FIG. 8]

[FIG. 9]

[FIG. 10]

[FIG. 11]

[FIG. 12]

[FIG. 13]

[FIG. 14]

[FIG. 15]

[FIG. 16]

## INTERNATIONAL SEARCH REPORT

International application No.

**PCT/KR2020/011732**

### A. CLASSIFICATION OF SUBJECT MATTER

**C08J 3/075**(2006.01)i; **C08J 3/24**(2006.01)i; **C08J 3/18**(2006.01)i; **H01B 1/12**(2006.01)i

According to International Patent Classification (IPC) or to both national classification and IPC

### B. FIELDS SEARCHED

Minimum documentation searched (classification system followed by classification symbols)

C08J 3/075(2006.01); C08J 3/24(2006.01); C08L 33/08(2006.01); D21H 13/50(2006.01); D21H 21/14(2006.01); H01B 5/00(2006.01); H01M 10/0565(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자 매트릭스(polymer matrix), 가소제(plasticizer), 이온 도전성 도펀트(ionic liquid), 겔(gel)

### C. DOCUMENTS CONSIDERED TO BE RELEVANT

| Category* | Citation of document, with indication, where appropriate, of the relevant passages | Relevant to claim No. |
|---|---|---|
| Y | HIRAI, T. et al. The effects of adding ionic liquids to plasticized PVC gel Actuators. 2010 IEEE International Conference on Mechatronics and Automation. 2010, thesis no.: 11576505, pp. 71-76. See abstract; page 71, right column, second paragraph - page 72, left paragraph, first paragraph; table 1; and figure 1. | 1-8 |
| Y | KR 10-2019-0050595 A (INHA UNIVERSITY RESEARCH AND BUSINESS FOUNDATION) 13 May 2019 (2019-05-13) See claims 1-4; paragraphs [0033], [0042] and [0044]; and figure 1. | 1-8 |
| A | KR 10-2013-0114097 A (RHODIA OPERATIONS et al.) 16 October 2013 (2013-10-16) See entire document. | 1-8 |
| A | JP 5660595 B2 (THE UNIVERSITY OF TOKYO) 28 January 2015 (2015-01-28) See entire document. | 1-8 |
| A | JP 2018-055866 A (TORAY IND INC. et al.) 05 April 2018 (2018-04-05) See entire document. | 1-8 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**20 January 2021** | Date of mailing of the international search report<br><br>**21 January 2021** |
| Name and mailing address of the ISA/KR<br><br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2020/011732**

| Patent document cited in search report | | | Publication date (day/month/year) | Patent family member(s) | | | Publication date (day/month/year) |
|---|---|---|---|---|---|---|---|
| KR | 10-2019-0050595 | A | 13 May 2019 | KR | 10-1993528 | B1 | 26 June 2019 |
| KR | 10-2013-0114097 | A | 16 October 2013 | CN | 103210450 | A | 17 July 2013 |
| | | | | CN | 103210450 | B | 15 February 2017 |
| | | | | CN | 103493145 | A | 01 January 2014 |
| | | | | CN | 103493145 | B | 15 February 2017 |
| | | | | EP | 2606491 | A1 | 26 June 2013 |
| | | | | EP | 2606530 | A2 | 26 June 2013 |
| | | | | EP | 2606530 | B1 | 26 April 2017 |
| | | | | JP | 2013-541603 | A | 14 November 2013 |
| | | | | JP | 2013-543013 | A | 28 November 2013 |
| | | | | JP | 5814368 | B2 | 17 November 2015 |
| | | | | JP | 5918236 | B2 | 18 May 2016 |
| | | | | KR | 10-1898499 | B1 | 13 September 2018 |
| | | | | KR | 10-1942025 | B1 | 24 January 2019 |
| | | | | KR | 10-2014-0000670 | A | 03 January 2014 |
| | | | | US | 2012-0043530 | A1 | 23 February 2012 |
| | | | | US | 2012-0052395 | A1 | 01 March 2012 |
| | | | | US | 2014-0291584 | A1 | 02 October 2014 |
| | | | | US | 8784690 | B2 | 22 July 2014 |
| | | | | US | 9378859 | B2 | 28 June 2016 |
| | | | | US | 9552903 | B2 | 24 January 2017 |
| | | | | WO | 2012-023989 | A2 | 23 February 2012 |
| | | | | WO | 2012-023989 | A3 | 12 September 2013 |
| | | | | WO | 2012-023992 | A1 | 23 February 2012 |
| JP | 5660595 | B2 | 28 January 2015 | JP | 2011-101985 | A1 | 09 June 2011 |
| | | | | WO | 2009-101985 | A1 | 20 August 2009 |
| | | | | WO | 2009-102077 | A1 | 20 August 2009 |
| JP | 2018-055866 | A | 05 April 2018 | None | | | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190071489

- KR 101898499